# EUROPEAN PATENT APPLICATION

(11) **EP 3 719 812 A1**
(43) Date of publication of application: **07.10.2020**
(21) Application number: 17909658.1
(22) Date of filing: 25.12.2017
(51) Int. Cl.: G21C 3/58, G21C 19/42

(54) **FUEL COMPOSITION FOR WATER-COOLED THERMAL NEUTRON NUCLEAR POWER PLANT REACTORS**

(30) Priority: 27.11.2017 RU 2017141358
(71) Applicant: Akcionernoe Obshhestvo "Radiyevyy Institut Imeni V.G. Khlopina", St. Petersburg 194021 (RU)
(72) Inventor: ZIL'BERMAN, Boris Yakovlevich, St.Petersburg 197348 (RU); GOLETSKIJ, Nikolaj Dmitrievich, St.Petersburg 197371 (RU); KOVALYOV, Nikita Vladimirovich, p. Shushary St.Petersburg 196626 (RU); SINYUKHIN, Andrej Borisovich, St.Petersburg 194352 (RU)
(74) Representative: Friese Goeden Patentanwälte PartGmbB
(86) International application number: PCT/RU2017/000932
(87) International publication number: WO 2019/103642

(57) **Abstract**

The invention is related to nuclear technologies, particularly to the fuel of NPPs on thermal neutrons. A fuel composition is proposed, which includes a mixture of regenerated plutonium and enriched uranium in the form of oxides, in which the enriched natural uranium is used as enriched uranium as well as regenerated plutonium, with a ratio of components, determined by the energy potential, equal to the potential of freshly prepared NPP fuel from enriched natural uranium, which provides the loading of the reactor core up to 100%. Possible options of the specified components are claimed, including unlimited cycling of the secondary regenerated plutonium and uranium. The use of the proposed composition makes it possible to use of the uranium and plutonium energy potential at maximum level, including accumulated SNF, and sharply reduce the volume of warehouses, up to their decommissioning, as well as significantly simplify the logistics and technology of manufacturing nuclear fuel from recycled materials.

## Description

The invention is related to nuclear technologies, particularly to the fuel of NPPs on thermal neutrons.

Presently, the NPPs water-cooled reactors, among which the majority are reactors under pressure (PWR, VVER/water-cooled power reactor), are being loaded with fuel composition of Uranium dioxide UO₂, containing 3.5-5% of U²³⁵ isotope (30-50 kgs/t of U) for reactors under pressure. It is required to provide average burnup of spent nuclear fuel (SNF) at the level 30-50 GW^{∗}day/h HM (heavy metals + fission fragments - FF) in the load with its trend for enlargement up to 70 GW^{∗}days/t HM. This high burnup is achieved by the SNF efficient movement through zones of the reactor, and the number of such annual or year and a half re-loads, when having the reactor refueling interval of 1-1.5 years, increases with increasing burnup.

Currently, SNF of VVER-1000 with an initial enrichment of 4.6% (46.0 kg/t) ²³⁵U and a burnup of 47 GW^{∗}days/t contains 11.9 kg/t of ²³⁵U in the presence of 6.2 kg/t of ²³⁶U, which is a moderate neutron absorber and 12.3 kg/t Pu, including 8.4 kg/t of the amount of the odd-numbered (fissionable) isotopes ²³⁹⁺²⁴¹Pu. With the deduction of even-numbered isotopes compensation, energy potential of fissionable isotopes for SNF of VVER and PWR-1300 is ∼30-35% of the initial one, which fundamentally allows to use such materials again after NPP SNF processing. However, there are various restrictions on both reactors design and biological protection in the manufacturing of regenerated reactor fuel. In this case, in RBMK-1000 and VVER-1000 reactors, uranium is partially used, regenerated from transport and research reactors SNF, and it has a preliminary increased enrichment; there is information about the production of a pilot batch of fuel for the RBMK reactor from enriched uranium, regenerated from VVER (PWR) SNF. Mixed uranium-plutonium regenerated fuel in reactors under pressure is partially used only in France, with uranium and plutonium being separated during SNF processing.

The plutonium of the specified or close to it isotope composition, with the content of 60-90 kg/t in the fuel composition, is used in the form of mixed with depleted uranium (1.5-2.5 kg/t ²³⁵U) oxide fuel (MOF/Mixed Oxide Fuel), which 30% of obsolete PWR-900 reactors zones are loaded with, and this forms 40% of the French NPP power capacity, i.e. ∼ 12% of the electricity, generated at the NPP, is produced with the use of regenerated plutonium. For this purpose all the SNF quantity of PWR-900 and PWR-1300 reactors is being processed at the UP-2 factory in France. Extracted regenerated uranium is being enriched experimentally with the loading of two reactors active zones (AZ/core), (3% capacity), with the prospect of increasing up to 20-25% capacity during 5 years due to the accumulated in previous years regenerated stuff. SNF from the regenerated materials is not being serially processed.

The calculations, proving the possibility of supply VVER-1000 reactors core only partial loading with MOF-fuel, present a similar picture, due to which this solution has not yet found application at Russian NPPs.

A serious additional complication in the implementation of the program for the regenerated materials use is the need to produce fuel from them in protective equipment (including the enrichment of regenerated uranium) due to the high toxicity of plutonium and sufficiently strong gamma radiation of daughter actinides as byproducts of nuclear reactions.

To overcome the above drawback, we have proposed a fuel composition of the REMIX-B type, which allows to completely and simultaneously utilize the regenerated uranium and plutonium, extracted from SNF at 100% loading of the reactor zone (Patent RU No. 2 537 013, 20.06.2014, Bul. No. 17). This is achieved by the adding enriched regenerated uranium or its mixture with enriched natural uranium into the fuel oxide composition, based on regenerated plutonium, with a ratio of components, determined by the energy potential,equal to the potential of freshly prepared NPP fuel from enriched natural uranium, providing 100% loading of the reactor core. The fuel composition can consist of regenerated plutonium and uranium mixture, containing 5.25% of Pu and enriched uranium with a composition of 3.45% ²³⁵U, 2.23% of ²³⁶U and 1.3*10-6% ²³²U (the rest is ²³⁸U), on the balance regenerated from VVER SNF, to which, for the energy capacity accurate adjustment, a small amount of enriched uranium is added, in particular the regenerated uranium enriched to 17% ²³⁵U, extracted in the processing of highly enriched SNF of transport and research reactors. The fuel is used once without cycling. Due to this composition, such a fuel is being applied to ∼ 20% of the total number of reactor plants in the NCF (nuclear fuel cycle), and the remaining 80% work on enriched natural uranium and generate SNF, which is used for the production of REMIX-B fuel. This method we take as a prototype.

The term "equal energy potential" refers to the amount of energy (burnup, GW^{∗}days/t HM), that can produce nuclear fuel in a certain type of reactor to the loss of reactivity (ability to maintain a chain reaction) when loading the entire zone of the reactor or a certain part of it, which is determined by the balance of neutrons and their characteristics. This is provided by a certain content of dividing nuclides (odd isotopes of uranium and plutonium) with their compensation of these elements even isotopes, absorbing neutrons. Therefore, the fuel from the regenerated materials is formally more enriched by fissionable isotopes, than the initial fuel of the NPP from natural enriched uranium. Nuclear fuel from enriched natural uranium often contains additives of some amount of moderator, i.e. the absorber of excess neutrons at the start of the refueling interval; such additive in the VVER-1000 reactor is gadolinium. Even isotopes of uranium and plutonium play the role of moderators in the fuel from regenerated materials. If necessary, fine adjustment of the mix composition is achieved by introducing into it a smaller amount of enriched natural uranium.

It should be noted, that the classic MOF-fuel is not equipotential to fuel from natural enriched uranium, as it is operated under a special scheme with an increased content of plutonium, providing an equal final burnup. In addition, only 30-40% of the second-generation reactors zone with excess reactivity (the above-mentioned PWR-900 in France) can be loaded with such fuel.

Calculations of equipotential fuel compositions in relation to certain reactor zones are carried out using IAEA standard codes (for example, LA-UR=03-1987. MCNP - A General Monte Carlo Code, Version 5).

Disadvantages of REMIX-B mixed fuel on the prototype largely due to radiation-monitoring characteristics of the production process of its components from regenerated uranium, as well as the fuel itself, associated with the accumulation of daughter nuclides of uranium-232, generated in the VVER (PWR) reactor during uranium-235 irradiating and, therefore, being contained in the fuel. The limiting factor is the accumulation and decomposition of a daughter thorium-228 with a chain of short-living gamma-emitting alpha-decay products. When having in this case the uranium-232 concentration at the level of 12-15 ppb, the time of manual work with the material in glove equipment without heavy protection is limited to period of about 10 days, i.e. after each transportation by railway special-purpose vehicles, a complete re-treatment of such uranium product is required. Therefore, the production of fuel from such material is better to be organized by the most simple technology at the place of uranium isotope enrichment without transportation to the plant, where plutonium-containing fuel is being made in the protective equipment, as well as without purified energy plutonium dioxide transportation to the enrichment plant, which would be undesirable in terms of safety requirements. And the production of mixed fuel for 100% loading of the VVER (PWR) reactor zone remains in demand. Another disadvantage of the REMIX-B composition is the inability to increase the concentration of plutonium in it above ∼5-5.5% due to imbalance with regenerated uranium, the excess of which leads to the appearance of the second composition to be disposed of in the reactor as fuel.

It should be noted that these disadvantages can be partially overcome by the development of earlier approaches to this problem by increasing the composition of a high plutonium content feeding with increased number of ²³⁵U, while reducing the content of regenerated uranium, if we consider this feeding out of association with a specific NFC (Nuclear Fuel Cycle) with reactors on thermal neutrons (Pavlovichev A. M., Pavlov V. I., Semchenkov Y. M., Fedorov Y.S., Bibichev B. A., Zilberman B. Y. Neutron-physical characteristics of the VVER-1000 reactor core at 100% loading by fuel from a mixture of regenerated uranium, plutonium and enriched uranium. Nuclear energy, 2008, vol. 104, No. 4, pp. 196-198; Youinou G., Delpech M., Guillet J.L., Puil A., Aniel S. Plutonium Management and Multirecycling in LWRs Using an Enriched Uranium Support. Proc. Int. Conf. Global"99, (USA, 1999)). This kind of composition, proposed by French specialists to ensure at least incomplete (according to our calculations) loading of the PWR-1300 reactor core with mixed fuel, has been called by them as MIX fuel. These works we accepted as analogues. It should be noted, that these analogues do not solve the problem of limiting the uranium-232 harmful effects, because in such a fuel there is regenerated uranium, and the concentration of uranium even isotopes increases with the cycling of these fuels.

The object of the claimed invention is to develop a fuel composition under the conditional name MIX-B, which allows parallel utilization of regenerated plutonium and uranium, extracted from SNF without these complications. At the same time, it should combine the positive aspects of both the prototype and analogues. It should also be emphasized, that the subject of this invention is a previously not used combination of the fuel composition ingredients, since its exact composition depends on the type and mode of the reactor, in which it is being loaded, and it is somewhat corrected as a result of mandatory reactor tests and the acquired operating experience, which allows some refinement of the operating calculation codes, available at each company, producing nuclear fuel.

The technical result is achieved by the use of a fuel composition for NPP water-cooled power reactors on thermal neutrons, comprising a mixture of plutonium oxides, when plutonium was regenerated in the processing of uranium spent nuclear fuel from such reactors, and enriched uranium. And this composition is characterized by that, at providing 100% load of the reactor core, it comprises enriched natural uranium at a ratio with the regenerated plutonium, providing equal energy potential with freshly prepared fuel from enriched natural uranium, whereas the enriched regenerated uranium is included in the composition, used at the NPP, that does not contain plutonium and also provides equal energy potential with freshly prepared fuel from enriched natural uranium, with unlimited cross-cycling of both regenerated materials in the specified compositions.

The fuel composition for NPP water-cooled reactors, in which the regenerated uranium, extracted from the irradiated claimed composition after the refueling interval in the reactor, is part of the general composition of the regenerated uranium, while the plutonium, extracted from the irradiated composition of the regenerated uranium is part of the claimed composition.

For the VVER-1000/1200 reactor at standard SNF burnup of 47 GW^{∗}days/t and 504 days refueling interval between the SNF reloading, composition of the mixed fuel contains regenerated plutonium from 5 to 12% at the content of enriched uranium from 3.5% to 2% ²³⁵U only of natural origin and at providing equal energy potential with fresh fuel from natural uranium with enrichment of 4.6% ²³⁵U or other content of ²³⁵U, taken in the fuel cycle of VVER-1000/1200 reactors.

Fuel composition for NPP water-cooled reactors, which contains a part of natural uranium without enrichment, and enriched uranium in the form of a ready composition for NPP fuel, as well as plutonium regenerated at different times, including from the SNF of different types reactors and/or batches, mixed according to calculation with natural and natural enriched uranium in any combination to achieve the required energy potential.

The claimed composition, with its optimal composition, is intended for loading into a reactor with an increased number of RCS (Reactor Control System) with an extended refueling interval and subsequent disposal without processing. Its use is not time-bound with the use of a composition, containing enriched regenerated uranium.

Such a fuel composition for NPP water-cooled reactors contains at least 5% of the regenerated plutonium and uranium of natural origin, enriched from 3 to 1.3% ²³⁵U at components ratio, determined by an energy potential, equal to the potential of freshly prepared NPP fuel from enriched natural uranium, assuming 100% load of the reactor on thermal neutrons of type VVER (PWR) core with such fuel. When processing, the regenerated uranium is being removing from SNF into a separate chain, in which the enrichment is being carrying out to the standard values, used in the VVER-type reactors with compensation of ²³⁶U, and this fuel is used once and plutonium from any uranium SNF, including secondary regenerated plutonium, extracted from spent regenerated uranium, is the basis for the manufacturing MIX-B fuel, for which purpose it is mixed with enriched natural uranium and is used without cycling or with one recycle, if the latter is advantageous in terms of the use of residual energy potential.

Irradiation of the proposed fuel composition is appropriate to introduce in the mode of maximum burnup in a specially selected for this purpose series reactors with the increased number of re-loads, so that the uranium from such SNF, according to the amount of the ²³⁵U isotope, would be out of interest in terms of cycling in a CNCF (closed nuclear fuel cycle) in the short term.

Regenerated uranium is being enriched and converted into oxide fuel in a separate chain, taking into account the compensation of the ²³⁶U nuclear properties and its radiation-monitoring characteristics due to the presence of ²³²U. This fully applies to the secondary regenerated uranium, extracted from the spent fuel MIX-B.

In its turn, the secondary regenerated plutonium, extracted from SNF, based on enriched regenerated uranium, is included without limitation in the composition of the MIX-B.

The main advantage of this mixed fuel composition is that it is simpler in composition and logistics, since it is not associated to the balance on the use of enriched regenerated uranium and in the absence of restrictions on the timing regarding the treatment with enriched regenerated uranium, the use of which in Russia is mastered on a production scale and can be implemented in Russia in full earlier, than REMIX-B. In a balanced CNCF the number of reactors with plutonium is even less, than according to the prototype, but it is possible to arbitrarily increase their number to align the development time with the regenerated uranium. This exceeds the shortcomings, caused by the increase in the number of reactors with fuel loading in the protective version, compared to the prototype.

The second advantage is the simplified scheme of processing and manufacturing the fuel composition by separating the flows with regenerated uranium and plutonium into separate chains.

The amount of this PWR (VVER) reactors SNF reduces 3-7 times in comparison with the initial SNF, depending on its burnup. At the same time, with a high content of plutonium in the mixed fuel, the balance of NFC makes it possible to involve an additional amount of plutonium taken from the warehouse.

With an increased number of control and protection system in the reactor (VVER-1200 or EPR-1600), the amount of such a plutonium-containing regenerated fuel reduces 7.5-8 times, and it is irradiated in the dedicated for this purpose reactor in the refueling interval with increased burnup, which, with an excess of the accumulated plutonium in the warehouse, makes its processing impractical.

The above can be explained by examples.

### Example 1

The fuel composition MIX-B consists of the regenerated plutonium dioxide, extracted from VVER-1000 SNF in the amount of 3.87 t HM (the initial total result of actinides amount in the load) with a burnup of 47 GW^{∗}days/t HM and exposure of 5 years, contains 5.0% mass. Pu (3.4% ²³⁹⁺²⁴¹Pu) in a mixture with enriched natural uranium, containing 2.9% ²³⁵U (the rest is ²³⁸U). The composition (1 t HM) has an equal energy potential with a standard fresh fuel, containing 4.6% ²³⁵U, and is suitable for loading 100% of the VVER-1000 reactor core, when the reactor operates at refueling interval of 504 effective days (1.5 years) at two re-loads (a total of 5 years per each FA).

Simultaneously 3.82 tons HM of regenerated uranium, having a composition of 1.27% ²³⁵U, as well as 0.65% ²³⁶U and 3 ppb ²³²U (the rest is ²³⁸U), are being extracted from such a quantity of SNF. From such a quantity, 0.83 HM regenerated uranium fuel is being produced.

The MIX-B spent fuel contains 4.1% of the mass. Pu (2.4% of ²³⁹⁺²⁴¹Pu) in the mixture with uranium, containing 1.4% of ²³⁵U, as well as 0.33% of ²³⁶U and 3 ppb ²³²U (the rest is ²³⁸U). After processing, the regenerated uranium is being sent for enrichment together with the uranium from VVER-1000 regular SNF in a separate chain and thus provides, during the subsequent production, another 0.25 t HM of equipotential fuel from regenerated uranium. Regenerated plutonium from such spent fuel is being returned for the production of MIX-fuel. 1.08 t HM of fuel from regenerated uranium is being produced in total.

From the secondary regenerated plutonium, 0.39 t HM of the secondary mixed fuel MIX-B2 is being produced, containing 100 kg Pu /t HM in a mixture with natural uranium, enriched to 3.0% ²³⁵U. Regenerated from it uranium is also being sent into the enrichment chain with an additional production of 0.12 tons of fuel.

The extracted plutonium, by the isotope combination, still has a small energy potential (1 kg of ²³⁵U equivalent per 5 kg Pu), but its use for VVER reactors becomes unprofitable, and it is being sent to storage, and then goes to the production of starting fuel for Fast Neutron Nuclear Reactors.

Secondary regenerated uranium with a double predominance of ²³⁶U over the residual ²³⁵U is sent to the disposal site.

Such recycling can take place in a stationary state as long as necessary without the reactor load ratio distortion by different fuels.

Thus, the fuel with regenerated plutonium can be loaded into 36% of the total number of thermal neutron reactors, and the fuel from enriched regenerated uranium ∼ 34% of the total number of VVER reactors. The balance of NFC occurs when 53% of the VVER reactors total number are loaded with fresh uranium fuel, and 47% - with regenerated fuel, including 25% of reactors - with plutonium-containing fuel of type MIX-B and MIX-B2 and 22% - with regenerated uranium fuel.

### Example 2

The fuel composition MIX-B consists of the regenerated plutonium dioxide, extracted from VVER-1200 SNF in the amount of 7.0 t HM (the initial total result of actinides amount in the load) with a burnup of 47 GW^{∗}days/t HM and exposure of 5 years, contains 9.0% mass. Pu (6.1% ²³⁹⁺²⁴¹Pu) in a mixture with enriched natural uranium, containing 1.36% ²³⁵U (the rest is ²³⁸U). The composition (1 t HM) has an equal energy potential with a standard fresh fuel containing 4.6% ²³⁵U, and is suitable for loading 100% of the VVER-1200 reactor core, when the reactor operates at refueling interval of 315 effective days (1 year) at 5 re-loads (a total of 6 years per each FA) with a burnup of 60 GW^{∗}days/t HM. Such fuel is loaded into 14% of the total number of VVER reactors, which does not exceed the total number of VVER-1200 reactors in the total number of VVER reactors. The increase in the energy plutonium content in the MIX-B fuel has been achieved due to the doubled number of RCS in the VVER-1200 reactor in comparison with the VVER-1000 reactor.

Simultaneously 6.9 tons HM of regenerated uranium, having a composition of 1.27% ²³⁵U, as well as 0.66% ²³⁶U and 3 ppb ²³²U (the rest is ²³⁸U), are being extracted from such a quantity of SNF. From such a quantity, 1.5 HM regenerated uranium fuel is being produced, which is being loaded into 20% of the total number of VVER reactors (preferably VVER-1000).

The spent fuel contains 6.4% of the mass. Pu (3.6% of ²³⁹⁺²⁴¹Pu) in the mixture with uranium, containing 0.68% of ²³⁵U, as well as 0.18% of ²³⁶U and 4 ppb ²³²U (the rest is ²³⁸U). The energy potential of the extracted plutonium is equivalent to 10.4 kg ²³⁵U, i.e. 1 kg ²³⁵U per 6 kg Pu, which, as in the Example 1, makes its further cycling economically impractical, so that it is removed from the cycle and used as in the Example 1.

After processing, the secondary regenerated uranium can be sent to enrichment in a separate chain, resulting in the subsequent production into 0.1 t HM of equipotential fuel, but this may also be considered economically inappropriate, and then, instead of enrichment, it is to be disposed of.

Thus, if there is an excess of plutonium in the warehouse, all secondary SNF can be sent for long-term storage and subsequent disposal without processing, and, instead of it, the excess plutonium from previous years of activity, taken from the nuclear materials warehouse, can be involved into the NFC.

## Claims

1. Fuel composition for NPP water-cooled power reactors on thermal neutrons, comprising a mixture of plutonium oxides, when plutonium was regenerated in the processing of uranium spent nuclear fuel from such reactors, and enriched uranium. And this composition is **characterized by** that, at providing 100% load of the reactor core, it contains enriched natural uranium at a ratio with the regenerated plutonium, providing equal energy potential with freshly prepared fuel from enriched natural uranium, whereas the enriched regenerated uranium is included in the composition, used at the NPP, that does not contain plutonium and also provides equal energy potential with freshly prepared fuel from enriched natural uranium, with unlimited cross-cycling of both regenerated materials in the specified compositions.

2. Composition according to cl. 1, **characterised in that** the secondary regenerated uranium, extracted from the irradiated claimed composition after the refueling interval in the reactor, is part of the general composition of the regenerated uranium, while the secondary regenerated plutonium, extracted from the irradiated composition of the regenerated uranium is part of the claimed composition.

3. Composition according to cl. 1 and 2, **characterised in that** for the VVER-1000/1200 reactor at standard SNF burnup of 47 GW^{∗}days/t and 504 days refueling interval between the SNF reloading, contains regenerated plutonium from 5 to 12% at the content of enriched uranium from 3.5 to 2% ²³⁵U only of natural origin and at providing equal energy potential with fresh fuel from natural uranium with enrichment of 4.6% ²³⁵U or other content of ²³⁵U, matching the fuel cycle of VVER-1000/1200 reactors.

4. Composition according to cl. 1 and 3, which contains a part of natural uranium without enrichment.

5. Composition according to cl. 1, 3 and 4, **characterised in that** the mixture of regenerated plutonium and enriched natural uranium contains the latter in the form of a finished composition for the fuel of the WWER-1000/1200 NPP.

6. Composition according to cl. 1 and 5, **characterised in that** it contains plutonium, that has been regenerated at various times, including from SNF of different type reactors and /or batches, and mixed according to calculation with natural and naturally enriched uranium in any combination to achieve the required energy potential.

7. Composition according to cl. 1 and 5, which, at its optimal proportion, is intended for loading into a reactor with an increased RCS number with an extended refueling interval and subsequent disposal without processing.

8. Composition according to cl. 1, **characterised in that** its use is not time-bound with the use of a composition, containing enriched regenerated uranium.
